# EUROPÄISCHE PATENTSCHRIFT

(11) **EP 0 531 859 B1**
(45) Veröffentlichungstag und Bekanntmachung des Hinweises auf die Patenterteilung: **24.05.1995**
(21) Anmeldenummer: 92114905.0
(22) Anmeldetag: 01.09.1992
(51) Int. Cl.: F27B 9/24, B65G 17/06

(54) **Brennofen insb. für keramische Erzeugnisse**
Firing furnace, in particular for ceramic articles
Four de cuisson, en particulier pour des articles céramiques

(30) Priorität: 13.09.1991 DE 4130437
(43) Veröffentlichungstag der Anmeldung: 17.03.1993
(73) Patentinhaber: Brakemeier, Karl-Heinz, D-31249 Hohenhameln (DE)
(72) Erfinder: Brakemeier, Karl-Heinz, D-31249 Hohenhameln (DE)
(74) Vertreter: Depmeyer, Lothar

(56) Entgegenhaltungen:
- EP-A- 0 148 804
- US-A- 3 922 140
- US-A- 3 940 240

## Beschreibung

Die Erfindung geht aus von einem Brennofen, insb. für keramische Erzeugnisse, bei dem das zu brennende Gut durch eine kanalartige Brennkammer mittels eines Förderers mit das Gut aufnehmenden Stäben hindurchführbar ist, die Schlitze in den Seitenwänden der Brennkammer durchsetzen und an ihren Enden ausserhalb der Brennkammer von untereinander verbundenen, schienengeführten Halterungen getragen sind, die im Schlitzbereich dicht bei dicht angeordnet sind.

Im Gegensatz zu solchen Brennöfen, bei denen das zu brennende Gut auf ortsfest gelagerten, drehbaren Rollen geführt wird, betrifft die Erfindung somit Brennöfen, die einen Transport des zu brennenden Gutes durch die Brennkammer vorsehen, und zwar mit Hilfe eines sich in Längsrichtung der Brennkammer bewegenden Förderers, der quer verlaufende, zum Tragen ausgebildete Stäbe aufweist, die die Seitenwand des Brennofens über einen Schlitz und schliesslich die Brennkammer durchsetzen.

Bei den bekannten Brennöfen dieser Art befinden sich die Halterungen für die querverlaufenden Stäbe innerhalb der Schlitze und zudem sind die Stäbe fest mit den Halterungen verbunden ( EP-B-0 148 804 ). Damit ergeben sich nicht nur Schwierigkeiten beim Abdichten der Schlitze, vielmehr ist es auch nicht möglich, einzelne Stäbe oder mehrere Stäbe einfach zum Beispiel zu Reparaturzwecken zu entfernen. Schliesslich sind immer zwei Querstäbe durch mehrere Längsträger zur Bildung eines wagenartigen Gebildes verbunden.

Aufgrund der Erfindung soll nicht nur die Schlitzabdichtung verbessert werden, sondern es ist auch ein wesentliches Ziel der Erfindung, die Stäbe so anzuordnen, dass sie z.B. aus Montagegründen von dem eigentlichen Förderer getrennt werden können, wobei auch eine Anordnung ermöglicht werden soll, dass die Stäbe an der Einlaufstelle aufgegeben und an der Auslaufstelle aus dem Brennofen entfernt werden können.

Zur Lösung dieser Aufgabe sind erfindungsgemäss die Merkmale nach dem Kennzeichnungsteil des Anspruchs 1 vorgesehen. Demgemäss können also die Stäbe leicht von ihren Halterungen entfernt werden, z. B. dort in Durchgangslöchern angeordnet sein, aus denen sie herausgezogen werden können. Zweckmässigerweise werden die Halterungen auch seitlich aussen an den Seitenwänden der Brennkammer angeordnet, wobei sie zumindest einen Schlitzrand überdecken, und zwar vorzugsweise den unteren Rand. Aber auch beide Schlitzränder können von den Halterungen überdeckt sein, die man vorzugsweise klotzartig gestaltet.

Wenn die Halterungen nicht durch Vorkehrungen zur Kontaktnahme mit den Seitenwänden ausgeführt sind, sollten sie sehr nahe an den Seitenwänden angeordnet werden und gegebenenfalls, unter Nutzung von Labyrinthdichtungswirkungen eine gute Abdichtung herbeiführen, um so die Verluste sehr gering zu halten. In Verbindung mit diesen Halterungen können somit an sich beliebige Vorrichtungen zur Verbesserung der Abdichtung verbunden sein.

Weitere Einzelheiten der Erfindung werden anhand der Zeichnung erläutert, in der Ausführungsbeispiele der Erfindung dargestellt sind. Es zeigen :
- Fig. 1: einen senkrechten Teilschnitt durch einen Brennofen für keramisches Gut ( linke Ofenhälfte ),
- Fig. 2: eine Teildraufsicht auf einen Rand eines Stabförderers für den Ofen gemäss Fig. 1,
- Fig. 3: den Förderer gemäss Fig. 2 in der Teilseitenansicht in Richtung der Stäbe des Förderers gesehen;
- Fig. 4: einen senkrechten Teilschnitt durch eine Halterung für die Stabenden in einer gegenüber Fig. 1 abgewandelten Form und
- Fig. 5: eine Teilseitenansicht einer weiter abgewandelten Halterung in Richtung eines Stabes gesehen, und zwar von der Aussenseite des Ofens her gesehen.

Die Brennkammer 1 wird in üblicher Weise von Seitenwänden 2, einem Bodenteil 3 und einer Decke 4 - alle Teile aus einem wärmeisolierenden Werkstoff - begrenzt. Die Brennkammer 1 wird von einem Stahlgerüst mit Ständern 5 und Querträgern 6 getragen. Dieses Gerüst dient auch zur Lagerung eines umlaufenden, endlosen Stabförderers mit im geringem, gegenseitigen Abstand angeordneten, waagerechten Stäben 7, die die Brennkammer 1 im unteren Teil durchsetzen und zudem durch je einen Schlitz 8 in den beiden Seitenwänden 2 hindurchgeführt sind. Diese Stäbe 7 sind als Vierkanthohlstäbe aus wärmefestem Material gefertigt und biegesteif. Die beiden Enden eines jeden Stabes 7 liegen ausserhalb der Seitenwände 2 und lagern unverschiebbar in einer Halterung 9, die blockartig ausgeführt und auf den Gliedern 10 einer Laschenkette gelagert sind, die ihrerseits mit ihren Gliedern 10 je auf Schienenrädern 11 angeordnet sind. Die Schienenräder 11 spuren in Schienen 12 für ein Arbeitstrum 13 ( Obertrum ) und ein Leertrum 14, das unten liegt. Die Laschenkette 10 ist also endlos und wird mit den von ihr getragenen Halterungen 9 mit den daran befestigten Stäben 7 herumgeführt, wozu nicht dargestellte Umlenkstellen und Antriebe erforderlich sind. Mit dieser Bewegung werden die Stäbe 7 von der Aufgabestation zur Abgabestation des Ofens geführt, wobei der eigentliche Arbeitsprozess des Brennens stattfindet.

Es versteht sich, dass die Halterungen 9 beim Umlauf des Förderers an den Umlenkstellen aufklaffen; im Arbeitstrum 13 liegen aber die Halterungen 9 dichtend aneinander und können hier auch noch nach Art von Nut und Feder bei 15 dichtend ineinandergreifen. Die der Brennkammer 1 Zugekehrten Flächen 16 der Halterungen gehen also praktisch fugenlos ineinander über. Da zudem die Fläche 16 der Halterungen 9 - ggfs. mit keramischem Schild 18 versehen -nahe an den dem Schlitz 8 benachbarten Aussenfläche der Seitenwand 2 liegt, wird eine gute Schlitzabdichtung für solche Schlitzbereiche erzielt, die nicht von den Stäben 7 durchsetzt sind. Um diese Abdichtung noch zu verbessern können weitere Massnahmen vorgesehen werden. So kann auch zwischen der Oberseite der Halterung 9 und der Seitenwand bei 19 ein Eingriff nach Art von Nut und feder vorgesehen werden. Ein solcher Formschluss kann auch an den Flächen 16 bei 20 installiert werden. Oben kann auch eine nachrutschende, in einer Führung 21 angeordnete Dichtungsplatte 22 gelagert sein. Eine ebenfalls von aussen bedienbare nachschiebbare, tangierende Dichtung 23 kann auch an der Seitenwand 2 gelagert sein und von unten die Halterung 9 berühren.

Um die nicht unerheblichen, durch das Gut 1' vorwiegend bedingten Stützkräfte der Stäbe 7 auf die Halterung 9 gehörig abfangen zu können, erhalten diese Durchgangslöcher 24, die mit festen Buchsen 25 od. dgl. ausgekleidet sind, die am äusseren Ende erweitert sein können. Dies ist bei 26 dargestellt. Derartige Lagerstellen der Halterung 9 ermöglichen den Austausch der Stäbe 7 z.B. bei Reparaturen, wozu die äusseren Erweiterungen 26 nützlich sein können. Um dabei ungewollte Axialbewegungen der Stäbe 7 auszuschliessen, lagern deren Stirnflächen vor Widerlagern 27 in den Buchsen 25 derart, dass sie nur einseitig vorgesehen sind, um die Stäbe 7 durch seitliches Verkanten im Sinne von Fig. 5 von den Widerlagern 27 freizuheben und so herausziehen zu können.

Gemäss Fig. 4 kann die Fläche 16 auch von flanschartigen Erweiterungen 28 der Buchsen 25 gebildet sein, die auch die Halterung 9 überragen und in eine Nut 29 der Seitenwand 2 eingreifen können ( Labyrinthwirkung ).

Die in Fig. 4 erkennbare Erweiterung 30 erleichtert das Einsetzen und Einführen der Stäbe 7 bei der Montage.

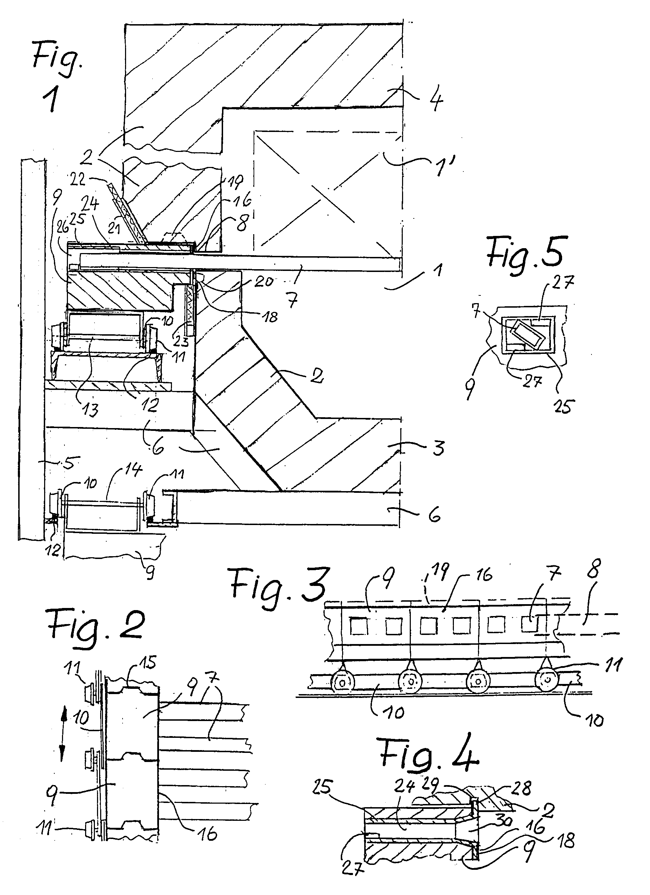

Um die Standsicherheit des Gutes 1' zu erhöhen, ist es sehr vorteilhaft, wenn jeder Halterung 9 mindestens zwei Stäbe 7 zugeordnet werden, wie dies in den Fig. 2 und 3 dargestellt ist. Die Standsicherheit der Halterungen 9 wird auch dadurch sichergesetllt, dass jeder Halterung 9 eine Lasche 10 zugeordnet ist, die an beiden Enden durch ein Schienenrad 11 getragen ist.

Wie aus Fig. 1 erkennbar, verlaufen die der Seitenwand des Brennofens zugekehrte Fläche 16 und die zugehörige, benachbarte Fläche der Seitenwand senkrecht dies ist für die Abdichtung vorteilhaft.

Anstelle der Durchgangslöcher 24 können auch randoffene Ausnehmungen treten, in die die Stäbe 7 durch eine Bewegung im rechten Winkel zu ihrer Längsrichtung ein- bzw. herausgelegt werden können, obwohl die dargestellten Durchgangslöcher 24 eine bessere Abdichtung gegenüber den Seitenwänden des Brennofens gewährleisten.

## Patentansprüche

1. Brennofen, insb. für keramische Erzeugnisse, bei dem das zu brennende Gut durch eine kanalartige Brennkammer mittels eines Förderers mit das Gut aufnehmenden Stäben (7) hindurchführbar ist, die Schlitze (8) in den Seitenwänden (2) des Brennofens und die Brennkammer (1) durchsetzen und an ihren Enden ausserhalb der Brennkammer (1) von untereinander verbundenen, schienengeführten Halterungen (9) getragen sind, die im Schlitzbereich dicht bei dicht angeordnet sind, dadurch gekennzeichnet, dass die die Schlitze (8) abdichtenden Halterungen (9) mit Lagerstellen, insb. Durchgangslöchern (24), zur auswechselbaren Anordnung der Stäbe (7) versehen sind.

2. Brennofen nach Anspruch 1, dadurch gekennzeichnet, dass die Halterungen (9) zumindest einen Rand der Schlitze (8), vorzugsweise aber beide Ränder der Schlitze (8) überdecken.

3. Brennofen nach Anspruch 1, dadurch gekennzeichnet, dass die Breite der Schlitze (8) nur geringfügig grösser ist als die Höhe der Stäbe (7).

4. Brennofen nach Anspruch 1, dadurch gekennzeichnet, dass die Halterungen (9) auf den Gliedern (10) einer Laschenkette angeordnet sind, deren Gelenkbolzen in Schienen (12) geführte Räder (11) tragen.

5. Brennofen nach Anspruch 1, dadurch gekennzeichnet, dass die der Ofenseitenwand (2) zugekehrte Fläche der Halterungen (9) durch vorzugsweise keramische Platten (18,28) bewehrt ist.

6. Brennofen nach Anspruch 1, dadurch gekennzeichnet, dass zwischen der Halterung (9) und der Ofenseitenwand (2) kontaktierende Dichtungen (22,23) wirksam sind.

7. Brennofen nach Anspruch 1, dadurch gekennzeichnet, dass im Arbeitstrum (13) in Laufrichtung des Stabförderers aufeinanderfolgende Halterungen (9) formschlüssig ineinandergreifen.

8. Brennofen nach Anspruch 1, dadurch gekennzeichnet, dass an der Oberseite und/oder der der Ofenseitenwand (2) zugekehrten Fläche (16) der Halterung (9) einerseits und der Ofenseitenwand (2) andererseits formschlüssige Eingriffe nach Art von Nut und Feder vorgesehen sind.

9. Brennofen nach Anspruch 1, dadurch gekennzeichnet, dass den Stirnflächen der Stäbe (7) Widerlager (27) an den Halterungen (9) benachbart liegen, über die die Stäbe (7) z.B. durch Verkanten hinweghebbar sind ( Fig. 5 ).

10. Brennofen nach Anspruch 5, dadurch gekennzeichnet, dass ein Rand der Platten die Halterung (9) überragt und in eine Nut der Ofenseitenwand (2) hineinragt.

11. Brennofen nach Anspruch 1, dadurch gekennzeichnet, dass jeder Halterung (9) mehrere Stäbe (7) zugeordnet sind.

## Claims

1. Furnace, especially for ceramic products, wherein the material to be burned is conductable through a duct-like combustion chamber by means of a conveyor having bars (7), which receive the material and extend through slots (8) in the lateral walls (2) of the furnace and through the combustion chamber (1), said bars being supported at their ends externally of the combustion chamber (1) by holders (9), which are connected below one another and guided in rails, said holders being disposed close up to one another in the slot region, characterised in that the holders (9), which seal the slots (8), are provided with mounting points, especially through-bores (24), for the interchangeable disposition of the bars (7).

2. Furnace according to claim 1, characterised in that the holders (9) cover at least one edge of the slots (8), but preferably both edges of the slots (8).

3. Furnace according to claim 1, characterised in that the width of the slots (8) is only slightly greater than the height of the bars (7).

4. Furnace according to claim 1, characterised in that the holders (9) are disposed on the links (10) of a sprocket chain, the hinge pins of which are provided with wheels (11), which are guided in rails (12).

5. Furnace according to claim 1, characterised in that the face of the holders (9), facing the lateral furnace wall (2), is reinforced by tiles (18, 28), preferably ceramic tiles.

6. Furnace according to claim 1, characterised in that contacting seals (22, 23) are effective between the holder (9) and the lateral furnace wall (2).

7. Furnace according to claim 1, characterised in that holders (9), which follow one another in the working end (13) when viewed with respect to the direction of travel of the bar conveyor, engage in one another in a form-locking manner.

8. Furnace according to claim 1, characterised in that form-locking engagements, in the form of a tongue and groove, are provided on the upper surface and/or on the face (16) of the holder (9) facing the lateral furnace wall (2), on the one hand, and on the lateral furnace wall (2), on the other hand.

9. Furnace according to claim 1, characterised in that supports (27) on the holders (9) lie adjacent the end faces of the bars (7), and the bars (7) can be raised over said supports, e.g. by deformation (Fig. 5).

10. Furnace according to claim 5, characterised in that one edge of the tiles protrudes beyond the holder (9) and projects into a groove in the lateral furnace wall (2).

11. Furnace according to claim 1, characterised in that a plurality of bars (7) are associated with each holder (9).

## Revendications

1. Four de cuisson, notamment pour des produits en céramique, dans lequel le matériau à soumettre à la cuisson peut traverser une chambre de cuisson en forme de canal, en étant entraîné par un convoyeur comportant des barreaux (7) recevant le matériau, qui traversent des fentes (8) ménagées dans les parois latérales (2) du four de cuisson et la chambre de cuisson (1) et sont supportés au niveau de leurs extrémités, à l'extérieur de la chambre de cuisson (1), par des supports (9) reliés entre eux et guidés sur des rails et qui sont disposés très près les uns des autres dans la zone des fentes, caractérisé par le fait que les supports (9), qui ferment de façon étanche les fentes (8), sont pourvus d'éléments de support, notamment de trous traversants (24), pour la mise en place des barreaux (7) d'une manière interchangeable.

2. Four de cuisson suivant la revendication 1, caractérisé par le fait que les supports (9) recouvrent au moins un bord des fentes (8), mais de préférence les deux bords des fentes (8).

3. Four de cuisson suivant la revendication 1, caractérisé par le fait que la largeur des fentes (8) est seulement légèrement supérieure à la hauteur des bords (7).

4. Four de cuisson suivant la revendication 1, caractérisé par le fait que les supports (9) sont disposés sur les maillons (10) d'une chaîne articulée, dont les axes d'articulation portent des roues (11) guidées dans des rails (12).

5. Four de cuisson suivant la revendication 1, caractérisé par le fait que la surface des supports (9), tournée vers la paroi latérale (2) du four, est armée de plaques (18,28), de préférence en céramique.

6. Four de cuisson suivant la revendication 1, caractérisé par le fait que des éléments d'étanchéité (22,23) établissant un contact, agissent entre le support (9) et la paroi latérale (2) du four.

7. Four de cuisson suivant la revendication 1, caractérisé par le fait que des supports (9), qui se succèdent dans le brin de travail (13) dans la direction de déplacement du convoyeur à barreaux, s'interpénètrent selon une liaison par formes complémentaires.

8. Four de cuisson suivant la revendication 1, caractérisé par le fait que des dispositifs d'engagement selon une liaison par formes complémentaires du type à rainure et languette, sont prévus sur la face supérieure et/ou sur la face (16) du support (9), tournée vers la paroi latérale (2) du four, d'une part, et sur la paroi latérale (2) du four, d'autre part.

9. Four de cuisson suivant la revendication 1, caractérisé par le fait que des éléments de support (27), au moyen desquels les barreaux (7) peuvent être soulevés par exemple par basculement, sont disposés au voisinage des faces frontales des barreaux (6) sur les supports (9). (Figure 5).

10. Four de cuisson suivant la revendication 5, caractérisé par le fait qu'un bord des plaques est en saillie au-delà du support (9) et s'engage dans une rainure de la paroi latérale (2) du four.

11. Four de cuisson suivant la revendication 1, caractérisé par le fait que plusieurs barreaux (7) sont associés à chaque support (9).
